# EUROPÄISCHE PATENTSCHRIFT

(11) **EP 2 288 830 B1**
(45) Veröffentlichungstag und Bekanntmachung des Hinweises auf die Patenterteilung: **14.12.2011**
(21) Anmeldenummer: 08759709.2
(22) Anmeldetag: 16.05.2008
(51) Int. Cl.: F16J 15/08

(54) **EINLAGIGE DICHTUNG ODER DICHTLAGE EINER MEHRLAGIGEN DICHTUNG SOWIE VERFAHREN ZU DEREN HERSTELLUNG**
SINGLE-LAYER SEAL OR SEALING LAYER OF A MULTIPLE-LAYER SEAL, AND METHOD FOR ITS PRODUCTION
GARNITURE MONOCOUCHE OU COUCHE D' ETANCHEITE D' UNE GARNITURE MULTICOUCHE AINSI QUE PROCEDE POUR SA FABRICATION

(43) Veröffentlichungstag der Anmeldung: 02.03.2011
(73) Patentinhaber: Ste Gesellschaft für Dichtungstechnik mbH, 26386 Wilhelmshaven (DE)
(72) Erfinder: STECHER, Friedhelm, 26386 Wilhelmshaven (DE)
(74) Vertreter: Epping - Hermann - Fischer
(86) Internationale Anmeldenummer: PCT/EP2008/056077
(87) Internationale Veröffentlichungsnummer: WO 2009/138132

(56) Entgegenhaltungen:
- EP-A- 0 771 608
- EP-A- 1 600 671
- DE-A1- 4 421 219
- DE-A1-102004 033 906
- DE-C1- 19 520 695
- DE-T2- 69 831 391

## Beschreibung

Die Erfindung betrifft eine einlagige Dichtung oder eine Dichtlage einer mehrlagigen Dichtung aus Metall, die abstützende und abdichtende Bereiche aufweist. Die Erfindung betrifft des Weiteren auch ein Verfahren zur Herstellung einer derartigen Dichtung beziehungsweise Dichtlage.

Insbesondere bei Zylinderkopfdichtungen ist in der Praxis eine mehrlagige Stahldichtung sehr verbreitet. Diese besteht in der Regel aus einer Kombination von dünnen gesickten Federblechen als Decklagen, und einem dazwischen angeordneten Trägerblech, welches zur Abstützung der Sicken in den Decklagen dient.

Die nutzbare Elastizität einer Sicke in Verbindung mit einer Abstützung, wie sie bei Mehrlagendichtungen verwendet wird, ist relativ gering.

Wird bei einer Mehrlagendichtung zum Beispiel die Stützfläche entlastet, führt dies dazu, dass durch die Elastizität der Sicke die Federbleche von der Trägerlage abheben.

Ein weiterer Nachteil der klassischen Sicken in einlagigen Dichtungen besteht darin, dass es aufgrund der versetzten Anordnung der Dichtlinien an der Oberseite und der Unterseite beim laufenden Motor zu Winkelbewegungen kommen kann.

Die EP 0 771 608 A1 und die DE 195 20 695 C1 offenbaren jeweils eine dreilagige Dichtung mit einem geprägten Stopper in der Mittellage und einer Sicke in der Decklage.

Die EP 1 600 671 A1 und die DE 698 31 391 T2 offenbaren eine Dichtung mit geprägtem Stopper und einer Sicke. Der Stoppper weist jeweils in einer Ausführungsform gegenüberliegende Aussparungen auf.

Die DE 44 21 219 A1 offenbart eine Zylinderkopfdichtung mit gegenüberliegenden Aussparungen.

Der Erfindung liegt die Aufgabe zugrunde, eine Dichtung beziehungsweise eine Dichtlage aus Metall aufzuzeigen, welche einfach und kostengünstig herstellbar ist.

Die Aufgabe wird erfindungsgemäß dadurch gelöst, dasszumindest ein abstützender und abdichtender Bereich durch eine geprägte Kufe mit einer, gegenüber der ursprünglichen Blechdicke, erhöhten Dicke ausgeführt ist und hierzu an der Oberseite und/oder der Unterseite der wenigstens einen Kufe eine Stufe eingeprägt ist, durch welche sich die Kufe im eingebauten Zustand elastisch biegt und der abdichtende Bereich elastisch vorgespannt ist.

Die Ausbildung des abstützenden und abdichtenden Bereiches als geprägte Kufe hat den Vorteil, dass die Abstützung und die Abdichtung in einer Dichtung oder Dichtlage erfolgt. Dadurch, dass die Kufe geprägt ist und mit einer gegenüber der ursprünglichen Blechdicke erhöhten Dicke ausgeführt ist, ist diese kostengünstig herstellbar und darüber hinaus sehr stabil, da der Kufenbereich durch das Prägen kalt verfestigt ist.

Die Stufe hat den großen Vorteil, dass eine definierte Dichtlinie entsteht und je nach Anordnung der Stufe und auch Höhe der Stufe die Elastizität der Kufe eingestellt werden kann.

Durch die eingeprägte Stufenform ergibt sich im eingebauten Zustand eine elastische Biegung der Kufen mit Stützbereich und elastisch vorgespannte Dichtlinien. Günstigerweise wird die Formgebung der Dichtkante in Abhängigkeit von einer auf die Kufe später aufgebrachten Beschichtung gewählt.

Durch die wenigstens eine Stufe, ergibt sich eine elastischplastische Verformung der Kufe beim Einbau. Es entsteht somit ein elastisch-plastischer Stopper. Die abstützenden Bereiche werden nicht plastisch verformt und übernehmen die klassische Stopperfunktion. Z.B. bei versetzt gegenüberliegend angeordneten Stufen wird der Bereich zwischen den Stufen zu einem gewissen Grad auch plastisch verformt. Mit der verbleibenden Elastizität werden die abdichtenden Bereiche vorgespannt. Durch die Möglichkeit der plastischen Verformung im Stopper kann auf eine topographische Ausbildung des Stoppers verzichtet werden. Unter einer topographischen Ausbildung des Stoppers ist die Höhenprofilierung der Kufe im jeweils abstützenden Bereich zur Anpassung an den Dichtspalt zwischen Motorblock und Zylinderkopf gemeint.

Günstigerweise wird die Stufe nicht mit einem rechten Winkel eingeprägt, sondern mit einem stumpfen Winkel und der Winkel je nach Härte und Verschleißfestigkeit der gewählten Beschichtung gewählt.

Gemäß einer bevorzugten Ausführungsform wird die wenigstens eine Kufe durch eine Kombination von Querprägen und senkrechtem Verdrängungsprägen hergestellt, bei welchem ein Blech mit konstanter Materialdicke so quer gestaucht wird, dass im Bereich der Kufe eine größere Materialdicke entsteht.

Die Herstellung einer Kufe durch Querprägen und senkrechtem Verdrängungsprägen hat den Vorteil, dass beim Prägevorgang keine zusätzliche Abstützung notwendig ist und somit die Herstellung mit einer geringen Prägekraft erfolgen kann. Die Abstützung erfolgt durch die geprägte Kufe an sich, sodass keine überschüssige Prägekraft zum Abstützen benötigt wird. Weitere Vorteile zur Herstellung mittels Querprägen und senkrechtem Verdrängungsprägen werden nachfolgend anhand der Verfahrensansprüche aufgeführt und erläutert.

Die Ausbildung des abstützenden und abdichtenden Bereiches durch eine geprägte Kufe hat den weiteren Vorteil, dass die gesamte Dichtung beziehungsweise Dichtlage in einem einzigen Prägeschritt hergestellt werden kann. Dies ist insbesondere im Vergleich zu einer mehrlagigen Stahldichtung bestehend aus Decklagen und Trägerblech extrem kostengünstig. Auch bei Kombination der erfindungsgemäßen Dichtlage mit einer Federblechlage würde dies im Vergleich zu einer dreilagigen Mehrlagendichtung zu einer erheblichen Kosteneinsparung führen.

Günstig ist hierbei, wenn der Übergang zwischen der wenigstens einen Kufe und der Ursprungsfläche der Dichtung durch zumindest eine relativ dünne Scharnierstelle gebildet ist.

Die relativ dünne Scharnierstelle erlaubt, dass sich die Kufe beim Einbau der Dichtung beziehungsweise Dichtlage ausrichtet. Durch die Stufe nimmt die Kufe beim Einbau eine Schräglage ein und die relativ dünnen Scharnierstellen, welche die Kufe mit der restlichen Ursprungsfläche der Dichtung verbindet, nimmt die Verformung auf.

Gemäß einer Ausführungsform, bei welcher eine Stufe auf der Oberseite und Unterseite einer Kufe eingeprägt werden, ist es möglich, die Stufen so anzuordnen, dass die Dichtkanten parallel verlaufen. Dies ist günstig in Bereichen oder bei gesamten Dichtungen, welche über die Länge der Dichtkanten die gleiche Pressungsverteilung aufweisen und somit an allen Orten über die Länge der Dichtkante eine konstante Elastizität der Kufe besitzen.

Alternativ ist es bei Ausbildung einer Stufe an der Oberseite und der Unterseite einer Kufe auch möglich, die Stufen so einzupressen, dass die Dichtkanten nicht parallel verlaufen. Die Variation im Abstand der Dichtkanten an der Oberseite und der Unterseite zueinander ermöglicht über die Länge der Dichtkanten eine Einstellung der Elastizität der Dichtkufen. Dies ist insbesondere vorteilhaft in Anwendungsfällen, wie zum Beispiel einer Zylinderkopfdichtung, bei welcher über die Länge der Dichtkanten unterschiedliche Pressungsverteilungen vorliegen und aufgrund der unterschiedlichen Temperaturverhältnisse einmal bei kaltem Motor und einmal bei heißem Motor über die Länge der Dichtkanten nicht immer die gleiche Elastizität den optimalen Wert darstellt, sondern unterschiedliche Elastizitäten je nach Lage gefordert sind.

Des Weiteren ist es vorteilhaft, die Stufen zur Einstellung der Elastizität entweder planparallel zueinander oder schräg einzuprägen. Diese Ausführungsform erfordert nicht zwingend Stufen auf der Ober- und Unterseite einer Kufe, sondern ist auch möglich nur bei Einprägung einer Stufe auf einer Seite einer Kufe.

Der abstützende Bereich einer Kufe kann innen oder außen an der Kufe angeordnet sein. Je nach Anforderung ist die eine oder andere Ausbildung vorteilhaft. Zum Beispiel bei Zylinderkopfdichtungen ist es vorteilhaft, zwischen den Brennräumen die Abstützung beidseitig außen zu wählen, während bei Motoren mit Bundbuchsen es günstig ist, die Abstützung so zu wählen, dass die Abstützung hinter dem Bund auf dem Gehäuse aufliegt und die Kufe auf dem Bund nur elastisch angepresst wird.

Eine weitere Möglichkeit ist, die abstützenden Bereiche beidseitig an der Kufe vorzusehen und diese mit einer unterschiedlichen Materialdicke auszugestalten. Die im eingebauten Zustand zwischen Zylinderkopf und -block eingespannte Dichtung führt zu teilweise unterschiedlich starken Verformungen der Bauteile und dadurch örtlich auch zu mehr oder weniger starken Konizitäten.

Bei einer tragenden Kufenbreite von 5-6 mm lässt sich die Pressungsverteilung auf den Querschnitt der Kufen gezielt verteilen, indem man die Außen- und Innenabstützung, d.h. die abstützenden Bereiche einer Kufe unterschiedlich dick ausführt.

Insbesondere bei Verwendung der Dichtung beziehungsweise Dichtlage als Zylinderkopfdichtung ist es günstig, wenn sich die Kufen zwischen den Brennraumöffnungen vereinigen und danach wieder aufzweigen.

Gemäß einer weiteren vorteilhaften Ausgestaltung ist es günstig, wenn die nicht abstützenden Bereiche einer Kufe ein- oder beidseitig Aussparungen aufweisen. Dies erlaubt eine gezielte Einstellung der elastisch-plastischen Verformungskurve durch Veränderung des Widerstandsmoments des Biegequerschnittes.

Günstigerweise wird die Dichtung beziehungsweise Dichtlage als Zylinderkopfdichtung oder Flanschdichtung eingesetzt. Beide Dichtungsarten stellen Massenprodukte dar, sodass sich der Vorteil der extrem günstigen und schnellen Herstellung, insbesondere der Herstellung durch einen einzigen Prägeschritt, als eine immense Kostenersparnis darstellt.

Die Aufgabe wird ebenso gelöst durch ein Verfahren zum Herstellen einer Dichtung beziehungsweise Dichtlage, wie oben beschrieben, welches dadurch gekennzeichnet ist, dass eine Blechlage mit konstanter Materialdicke in einem Prägewerkzeug eingelegt wird und die Kufe der Dichtung beziehungsweise Dichtlage durch Prägen erzielt wird, wobei das Prägewerkzeug ein Oberteil und ein Unterteil aufweist, und beim Prägevorgang im Bereich einer Kufe der Raum zwischen Oberteil und Unterteil bei maximaler Prägekraft vollkommen ausgefüllt ist.

Vorzugsweise erfolgt die Herstellung der Kufe in einem einzigen Prägevorgang.

Die Herstellung der Kufen erfolgt hier günstigerweise durch eine Kombination von Querprägen und senkrechtem Verdrängungsprägen.

Günstigerweise sind hierzu sowohl am Oberteil als auch am Unterteil des Prägewerkzeuges beidseitig einer zu bildenden Kufe Vorsprünge bzw. Krallen ausgebildet.

Durch die Kombination der Querprägung mit der üblichen senkrechten Verdrängungsprägung wirken die beidseitigen Krallen als Abschluss, sodass im Inneren der Prägeform im Bereich zwischen den Krallen ein sehr hoher Druck entsteht, der das Prägematerial gegen die Formoberflächen drückt und somit eine Kalibrierung automatisch am Ende der kombinierten Prägung entsteht.

Dieses kombinierte Prägeverfahren mit Kalibrierung ohne zusätzliche Abstützung neben der eigentlich zu prägenden Dichtung beziehungsweise Dichtlage führt in einem einzigen Hub folgende drei Funktionen aus:
1. Abschotten der zu prägenden Kufen beidseitig durch die Krallen,
2. Verdrängen des Materials zwischen den Krallen, das heißt im abgeschotteten Bereich nach innen und somit Aufdicken des Materials,
3. Gefüllten Formbereich kalibrieren.

Alle drei Funktionen können in nur einem einzigen Hub erfolgen, wobei hierzu auch nur eine geringe Prägekraft wegen minimaler Reibung erforderlich ist.

Da keine zusätzliche Abstützung zwischen dem Oberteil und dem Unterteil des Prägewerkzeuges notwendig ist, wird auch keine überschüssige Presskraft zum Abstützen benötigt. Auch können sich keine Dickenfehler durch unerwünschtes örtliches Verformen der Abstützung einschleichen, da keine Abstützung benötigt wird. Ein weiterer Vorteil des Verfahrens besteht auch darin, dass die Kufen auch bei komplizierten Geometrien einer Zylinderkopfdichtung angewendet werden können, da kein Platz für eine zusätzliche Abstützung benötigt wird und somit beliebige Geometrien der Kufen möglich sind. Die volle Belastung, das heißt die volle Prägekraft tritt erst am Ende des Prägevorganges für große Prägeflächen auf, sodass keine große Reibung während der Verdrängung auftritt und die gesamte Verformung mit einer geringen Prägekraft durchgeführt werden kann.

Bei dem Rohling für die Dichtung bzw. Dichtlage können bereits vor dem Prägeschritt die Öffnungen für die Brennräume, Fluidleitungen und Schrauben ausgestanzt sein. Ebenso ist es jedoch auch möglich, diese Öffnungen in einem zweiten Stanzschritt oder kombiniert mit dem Prägeschritt auszustanzen.

Weitere Vorteile sind in der nachfolgenden Figurenbeschreibung sowie in den Unteransprüchen offenbart.

Nachfolgend wird anhand in den Figuren dargestellter Ausführungsbeispiele die Erfindung näher erläutert.

In den Figuren zeigen:
- Figur 1: eine Zylinderkopfdichtung in der Ansicht von oben,
- Figur 2: eine Flanschdichtung in der Ansicht von oben,
- Figur 3: den Schnitt A-A aus Figur 1 in 20-facher Vergrößerung,
- Figur 4: den Schnitt B-B aus Figur 1 in 20-facher Vergrößerung,
- Figur 5: den Schnitt C1-C1 aus Figur 1 in 20-facher Vergrößerung,
- Figur 6: den Schnitt C2-C2 aus Figur 1 in 20-facher Vergrößerung,
- Figur 7A: einen Ausschnitt eines Bundbuchsenmotors im Bereich der Abdichtung zwischen Zylinderkopf und Motorblock im schematischen Querschnitt,
- Figur 7B: die in Figur 7A eingesetzte Dichtung vor dem Einbau,
- Figur 7C: eine alternative Ausführungsform zu der in Figur 7B dargestellten Dichtung,
- Figur 8A: ein Prägewerkzeug im Querschnitt,
- Figur 8B: eine mit einem Prägewerkzeug gemäß Figur 8A verformte Dichtung beziehungsweise Dichtlage,
- Figur 9A: ein weiteres Prägewerkzeug im Querschnitt,
- Figur 9B: eine mit dem Prägewerkzeug nach Figur 9A verformte Dichtung beziehungsweise Dichtlage und
- Figur 10: im Querschnitt ein Prägewerkzeug zur Herstellung einer Kufe mit einer Aussparung an der Unterseite.

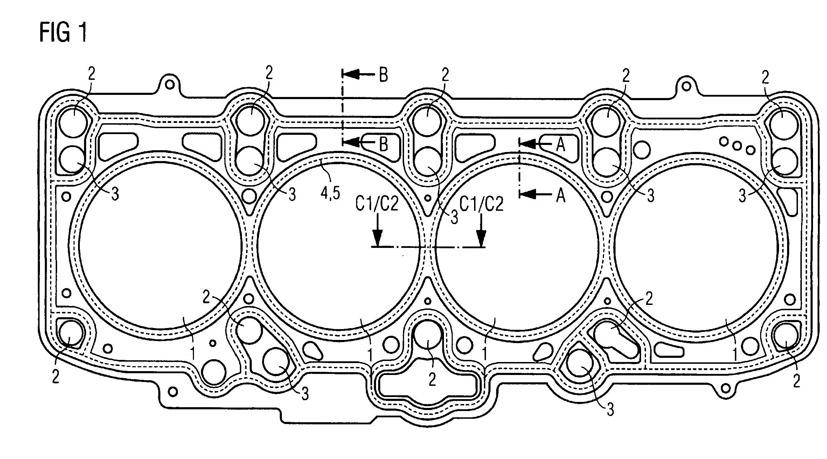

Figur 1 zeigt in der Ansicht von oben eine Zylinderkopfdichtung für einen vierzylindrigen Motor. Die Zylinderkopfdichtung kann im dargestellten Ausführungsbeispiel als einlagige Dichtung aus Metall oder als Dichtlage einer mehrlagigen Dichtung aus Metall ausgeführt sein. Die Zylinderkopfdichtung weist vier Brennraumöffnungen 1, eine Vielzahl von Schraubenöffnungen 2 sowie Öffnungen 3 für die Fluidleitungen, das heißt die Verbindungsleitungen für Wasser und Öl, auf.

Insbesondere die Brennraumöffnungen 1 müssen von einem abdichtenden Bereich 4 sowie einem abstützenden Bereich 5 umgeben sein, wobei der abstützende Bereich 5 dazu dient, die Elastizität des abdichtenden Bereiches 4 aufrechtzuerhalten. In Figur 1 ist der abstützende Bereich 5 sowie der abdichtende Bereich 4 als gestrichelte Linie eingezeichnet.

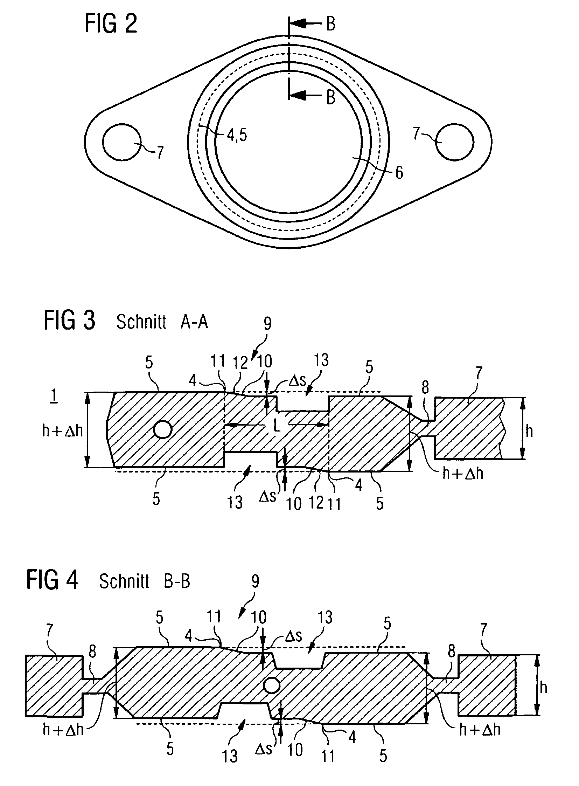

Figur 2 zeigt eine andere Ausbildung der Dichtung beziehungsweise Dichtungslage, diesmal als Flanschdichtung. Diese Flanschdichtung weist mittig eine Öffnung 6 für den Transport von Fluid oder Gasen auf, welche ebenso einen abstützenden Bereich 5 und abdichtenden Bereich 4 umgeben ist. Dieser ist wieder schematisch gestrichelt dargestellt.

Daneben weist die Flanschdichtung beidseitig Öffnungen 7 auf, welche nur zur Festlegung mittels Schrauben dienen.

Figur 3 zeigt den Schnitt A-A aus Figur 1 in 20-facher Vergrößerung.

Die rechte Seite des Schnittes A-A zeigt die Dichtung beziehungsweise Dichtungslage im unverformten Querschnitt 7. Im unverformten Zustand weist die Blechlage eine Höhe h auf. Über einen relativ schmalen Verbindungssteg 8 ist mit dem unverformten Dichtungsblech 7 eine aufgedickte Kufe 9 verbunden. Die aufgedickte Kufe 9 ist durch Prägen hergestellt, und vom ursprünglichen Querschnitt h auf den Querschnitt h + Δh aufgedickt. Die Kufe 9 weist abstützende Bereiche 5, insbesondere diejenigen Bereiche, die aufgedickt sind, auf die Materialdicke h + Δh und abdichtende Bereiche 4 auf.

Als abdichtende Bereiche 4 sind diejenigen Bereiche der aufgedickten Kufe 9 bezeichnet, die im eingebauten Zustand der Kufe elastisch vorgespannt werden und in einem definierten Bereich aufgrund der Formgebung der Kufe eine Dichtwirkung erzielen. Es ist für den Fachmann selbstverständlich, dass auch in den abstützenden Bereichen 5 jeweils eine Dichtwirkung erzielt wird. Im dargestellten Ausführungsbeispiel erkennt der Fachmann, dass sich nach dem Einbau die aufgedickte Kufe 9 elastisch so verformt, dass in Figur 3 der rechte abstützende Bereich 5 an der Unterseite, vor allem im linken Bereich, ebenfalls elastisch vorgespannt ist und somit zur Dichtwirkung beiträgt. Diese abdichtenden Bereiche, die im Bereich der abstützenden Bereiche 5 angeordnet sind, sind in den nachfolgenden Ausführungsbeispielen und Figuren nicht mit dem Bezugszeichen 4 versehen.

Sowohl an der Oberseite als auch an der Unterseite der Kufe 9 sind Stufen 10 eingeprägt, welche einen Höhenversatz von Δs im Vergleich zur aufgedickten Höhe h + Δh in der jeweiligen Oberfläche ausbilden. Durch die Stufen 10 werden definierte Dichtkanten 11 an den abdichtenden Bereichen 4 geschaffen. Die Stufen 10 sind im Übergang zum abstützenden Bereich 5 nicht vertikal, sondern über eine Schräge 12 gebildet, welche im Winkel an eine später auf die Dichtung beziehungsweise Dichtlage aufzutragende Beschichtung angepasst wird.

Des Weiteren sind an der Kufe 9 auf beiden Seiten Aussparungen 13 vorgesehen, welche der Kufe eine höhere Elastizität verleihen. Die Aussparungen 13 sind so angeordnet, dass sie zwischen den Stufen 10 angeordnet sind und günstigerweise an der Außenseite mit den Stufen 10 fluchten.

Die Stufen sind über das Maß L voneinander im Abstand angeordnet. Je größer das Maß L gewählt wird, desto weicher und elastischer wird die Kufe 9. Die Aussparungen 13 machen die Kufe zusätzlich weicher und elastischer. Das Maß L oder die Anordnung der Aussparungen kann über die Länge der Dichtkanten 11 oder der abdichtenden Bereiche 4 variieren, je nach dem, welche Elastizität benötigt wird.

In Figur 3 ist der Schnitt A-A im unverformten Zustand der Dichtung beziehungsweise Dichtungslage dargestellt. Im eingebauten Zustand verformt sich die Kufe 9 elastisch, sodass die abdichtenden Bereiche 4 an den Stufen 10 elastisch vorgespannt anliegen. Die Verformung nimmt der Verbindungssteg 8 auf, welcher somit als Scharnierstelle zwischen der Kufe 9 und dem unverformten Dichtungsblech 7 wirkt.

Figur 4 zeigt den Schnitt B-B aus Figur 1.

Figur 4 zeigt im Wesentlichen die gleiche Ausbildung der Kufe 9 wie in Figur 3, wobei die Kufe 9 im Ausschnitt gemäß Figur 4 beidseitig über Verbindungsstege 8 mit dem unverformten Dichtungsblech 7 verbunden ist.

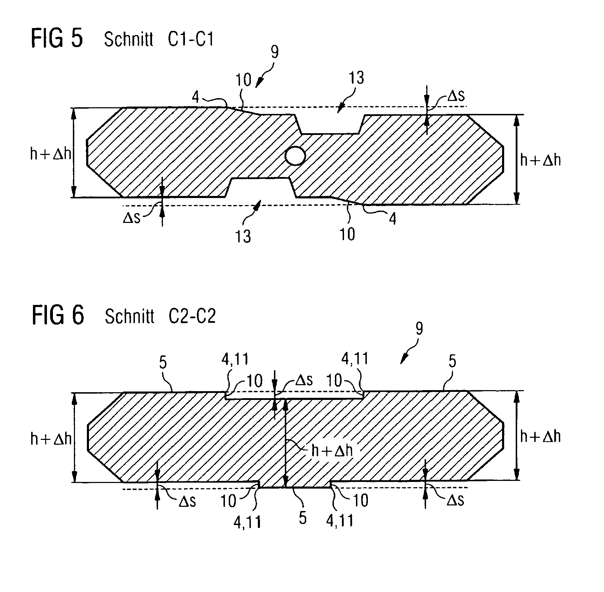

Figur 5 zeigt den Querschnitt C1-C1 aus Figur 1 ebenfalls in 20-facher Vergrößerung. Der Querschnitt aus Figur 5 zeigt den Bereich zwischen zwei Brennraumöffnungen 1. Die Ausbildung der Dichtungskufe 9 ist im Wesentlichen identisch ausgestaltet wie in Figur 3 und in Figur 4 beschrieben. Lediglich fehlt beidseitig die Anbindung über einen Verbindungssteg 8 an dem unverformten Blech 7. Dies zeigt, dass im Bereich zwischen den Brennraumöffnungen die Kufen zusammenlaufen, d.h. sich vereinigen und danach wieder aufzweigen.

Figur 6 zeigt eine alternative Ausbildung der Dichtung beziehungsweise Dichtlage im Bereich zwischen den Brennraumöffnungen 1. In Figur 6 ist der Schnitt C2-C2 ebenfalls in 20-facher Vergrößerung dargestellt. Die Dichtungskufe ist in diesem Bereich auf die Dicke h + Δh durch Prägen aufgedickt. An der Unterseite ist beidseitig eine nach außen weisende Stufe 10 mit dem Höhenunterschied Δs eingeprägt. An der Oberseite sind ebenfalls zwei Stufen 10 mit einem Höhenversatz von Δs eingeprägt. Die Stufen an der Oberseite weisen nach innen, so dass zwischen ihnen eine Aussparung entsteht. Um eine elastische Durchbiegung zu erzielen sind die Stufen 10 an der Unterseite innerhalb der Stufen 10 an der Oberseite, d.h. im Bereich der Aussparung angeordnet. Der Bereich zwischen den Stufen 10 an der Unterseite sowie auch die Bereiche außerhalb der Stufen 10 an der Oberseite fungieren als abstützende Bereiche 5. Die Materialdicke der Kufe beträgt immer h + Δh.

Wenn die Kufe 9 nicht zwischen zwei Brennraumöffnungen angeordnet ist, zweigt sich der untere abstützende Bereich 5 auf, so dass wieder Kufen 9 wie in den Figuren 3 bis 5 dargestellt entstehen.

Durch die eingeprägten Stufen 10, werden abdichtende Bereiche 4 beziehungsweise Dichtkanten 11 gebildet. Die Stufen 10 sind in diesem Ausführungsbeispiel in einem rechten Winkel eingeprägt.

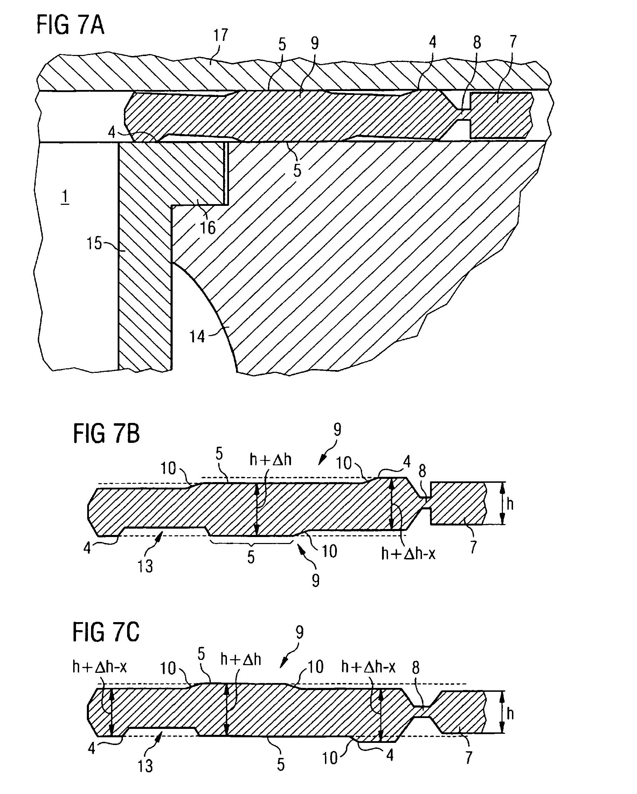

Figur 7A zeigt die Ausbildung der erfindungsgemäßen Dichtung beziehungsweise Dichtungslage bei Verwendung in einem Motor mit Bundbuchsen und Figur 7B nur die Dichtung vor dem Einbau.

In Figur 7A ist schematisch von einem Bundbuchsenmotor der Motorblock 14, die Bundbuchse 15 mit einem entsprechenden Buchsenbund 16, der dazugehörige Zylinderkopf 17 sowie dazwischen angeordnet ein Ausschnitt einer einlagigen Metalldichtung dargestellt. Im rechten Bereich ist der unverformte Bereich 7 des Dichtungsbleches zu sehen, welcher wiederum über einen Verbindungssteg 8 mit der aufgedickten Kufe 9 verbunden ist.

Die Ausbildung der Kufe 9 wird nachfolgend anhand Figur 7B erklärt, welche ebenso wie die Figuren 3 bis 6 die Kufen 9 im Zustand vor dem Einbau zeigen. An der Oberseite sind zwei Stufen 10 und an der Unterseite eine Stufe 10 eingeprägt.

Zwischen der Stufe 10 an der Unterseite und der linken Stufe 10 an der Oberseite der Kufe 9 ist ein abstützenden Bereich 5 gebildet. Die Kufe 9 ist in diesem Bereich auf die Materialdicke h + Δh aufgedickt.

Da der abstützende Bereich 5 auf der Unterseite der Dichtung nicht auf dem Bund 16 der Bundbuchse 15 zu liegen kommen soll, ist an der Unterseite neben dem abstützenden Bereich 5 eine Aussparung 13 vorgesehen und an der Oberseite überhalb der Aussparung 13 die in Richtung Brennraum gerichtete Stufe 10, sodass der linke zum Brennraum 1 gerichtete Bereich der Dichtung beziehungsweise Dichtungslage nur elastisch vorgespannt auf dem Bund 16 der Bundbuchse 15 aufliegt.

Da die Unterseite des freien Endes auf dem gleichen Niveau liegt wie der aufgedickte abstützende Bereich 5, wird die elastische Vorspannung dadurch erzielt, dass die Oberfläche der Bundbuchse 16 höher liegt als die Unterseite des abstützenden Bereiches 5.

Rechts des abstützenden Bereich 5 weist die Dichtung bzw. Dichtlage eine Materialdicke von h + Δh - X auf. Durch die um X verringerte Materialdicke verformt sich im eingebauten Zustand die Kufe 9 auch im rechten Bereich elastisch, und an der rechten eingeprägten Stufen 10 entsteht ein definierter abdichtender Bereich 4.

Links des abstützenden Bereiches 5 ist aufgrund der Aussparung 13 sowie der weiteren Stufe 10 an der Oberseite das freie Ende relativ dünn ausgebildet. Da die Oberfläche des Buchsenbundes 16 etwas höher liegt wie die Oberfläche des Motorblocks 14, auf welchem der abstützende Bereich 5 aufliegt, drückt das freie Ende elastisch vorgespannt gegen die Oberfläche des Buchsenbundes 16 und bildest somit einen weiteren abdichtenden Bereich 4.

Figur 7C zeigt eine alternative Ausführungsform zu Figur 7B. Die Ausführungsform gemäß Figur 7C weist ebenso mittig einen abstützenden Bereich auf, wobei an der Unterseite rechts davon eine Aussparung 13 angeordnet ist und oberhalb der Aussparung 13 eine Stufe 10. Der linke Abschnitt der Kufe 9 ist wieder relativ dünn ausgebildet mit einer Materialdicke am linken äußeren Ende von h + Δh - x.

Der abstützende Bereich weist eine Materialdicke von h + Δh auf und rechts des abstützenden Bereiches 5 ist wiederum an der Oberseite eine Stufe 10 eingeprägt und an der Unterseite nach rechts versetzt zur Stufe 10 an der Oberseite das Material aufgedickt auf h + Δh - x.

Die gesamte Kufe 9 ist anschließend über die Scharnierstelle 8 mit dem unverformten Dichtungsblech 7 mit einer Materialdicke von Δh verbunden.

Beim Einbau stützt der abstützende Bereich 5 die Dichtung zwischen Motorblock und Zylinderkopf wie in Figur 7A dargestellt ab.

Der linke äußere Bereich wird wieder elastisch vorgespannt auf die Oberfläche der Bundbuchse 15 gedrückt. Dies wiederum daher, da die Oberfläche der Bundbuchse 15 in der Regel leicht oberhalb der Oberfläche des umgebenden Motorblocks, auf welchem sich der abstützende Bereich 5 abstützt, angeordnet ist.

Ebenso wird nach dem Einbau der rechte Bereich der Kufe mit der Materialdicke h + Δh - x elastisch vorgespannt, sodass auch hier an der Stufe 10 an der Unterseite ein abdichtender Bereich 4 entsteht. Der Verbindungssteg 8 nimmt die entsprechende Verformung auf. Diese Ausbildung hat den Vorteil, dass beidseitig des abstützenden Bereiches die Kufe 9 nach oben gebogen wird und somit Kräftesymmetrie bezüglich des abstützenden Bereiches 5 besteht und damit ein permanentes Drehmoment auf den abstützenden Bereich 5 vermieden wird.

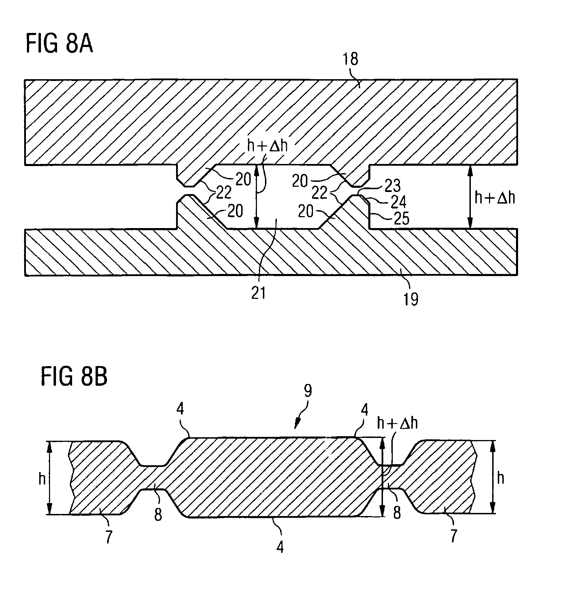

Figur 8A zeigt schematisch ein Prägewerkzeug mit einem Oberteil 18 und einem Unterteil 19 für die Herstellung einer erfindungsgemäßen Dichtung beziehungsweise Dichtungslage. An der Unterseite des Oberteiles 18 sowie an der Oberseite des Unterteiles 19 sind fluchtende Vorsprünge 20, so genannte Krallen, angeordnet, welche zwischen sich einen Hohlraum 21 definieren. Die Vorsprünge 20 sind an der Innenseite jeweils mit einer Schräge 21 versehen, welches beim Prägen das Material quer staucht und somit aufdickt. Um die Verbindungsstege 8 auszubilden, weisen die Vorsprünge stirnseitig einen horizontalen Abschnitt 23, daran anschließend kurze Außenschrägen 24 sowie an die Außenschräge 24 sich einen daran anschließenden vertikalen Abschnitt 25 auf. Der Abstand zwischen der Unterseite des Oberteils 18 und der Oberseite des Unterteils 19 weist sowohl in dem Hohlraum 21 als auch seitlich des Hohlraumes 21 in der Endstellung des Prägevorgangs die Höhe h + Δh, das heißt die Höhe der ursprünglichen Blechdicke plus die Aufdickung auf.

Durch die Geometrie des Prägewerkzeugs wird erreicht, dass durch die Vorsprünge 20 und insbesondere durch die Schrägen 22 das Material im Bereich des Hohlraumes 21 quer gestaucht wird und somit von der ursprünglichen Blechdicke h auf eine Dicke h + Δh aufgedickt wird. Die Vorsprünge 20 dringen mit relativ geringer Prägekraft in das Material ein, da lediglich zu Beginn der Prägephase das Eindringen der Vorsprünge 20 in das zu prägende Material durch die Prägekraft überwunden werden muss. Außerhalb der Vorsprünge 20 sind nur kurze Außenschrägen 24 und der sich daran anschließende vertikale Bereich 25 vorgesehen, da eine Aufdickung in diesem Bereich weitestgehend vermieden werden soll. Dies wird durch den vertikalen Bereich 25 erzielt, da somit eine Querverdrängung in diesem Bereich nicht stattfindet.

Die kurze Außenschräge 24 dient lediglich zum Erzielen eines stabilen Anschlusses des Verbindungssteges 8 an den unverformten Bereich 7 des Dichtungsbleches.

Figur 8B zeigt prinzipiell eine Dichtung beziehungsweise Dichtungslage, welche mit einem Werkzeug gemäß Figur 8A hergestellt wurde. Beidseitig befindet sich der unverformte Bereich des Dichtungsbleches mit einer Materialstärke von h. Die Kufe 9 ist durch Querprägen aufgedickt auf die Materialdicke h + Δh. Beim Prägewerkzeug gemäß Figur 8A sind die Schrägen 22 am Unterteil länger ausgebildet, wie die Schrägen 22 am Oberteil, wodurch sich eine asymmetrische Kufengeometrie ergibt und aufgrund der elastischen Rückfederung die Kufe leicht gewölbt ist. Hierdurch entsteht unten mittig ein abdichtender Bereich 4 sowie oben beidseitig zwei abdichtende Bereiche 4. Im dargestellten Ausführungsbeispiel beträgt die ursprüngliche Blechdicke 1,3 mm, wobei die Kufe 9 im aufgedickten Bereich eine Materialdicke von h + Δh = 1,48 mm aufweist. Die Aufdickung Δh beträgt somit 0,18 mm.

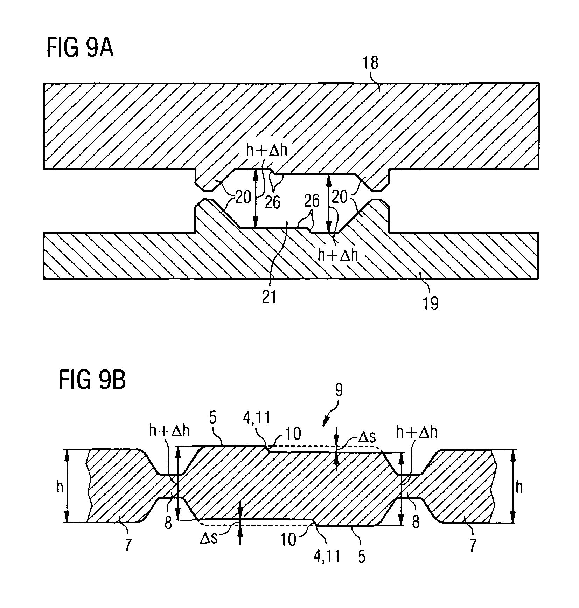

Figur 9A zeigt ein ähnliches Prägewerkzeug wie in Figur 8A, wobei im Hohlraum 21 sowohl an der Oberseite als auch an der Unterseite jeweils eine Stufe 26 eingearbeitet ist. Figur 9 zeigt den resultierenden Querschnitt einer Dichtung im Bereich der Kufe 9, welche mit einem Werkzeug gemäß Figur 9A hergestellt wurde.

Die Dichtungskufe 9 weist durch die Stufen 26 im Prägewerkzeug ebenfalls Stufen 10 an der Oberseite und Unterseite auf. Weist die Stufe 10 zum Beispiel eine Höhe von Δs = 0,08 mm auf, erfolgt die Aufdickung der gesamten Kufe nur auf eine Gesamtmaterialdicke von h + Δh = 1,4 mm. Durch die versetzte Ausbildung von Stufen 10 an der Oberseite und Unterseite bedeckt zwar immer noch die lichte Weite zwischen Oberseite und Unterseite 1,48 mm, jedoch wie zu den Figuren 3 bis 5 erläutert, verformt sich die Kufe 9 durch die eingeprägten Stufen 10 elastisch und plastisch und die abstützenden Bereiche 5 werden durch die aufgedickten Bereiche h + Δh mit einer Materialdicke gemäß diesem Beispiel von 1,4 mm gebildet.

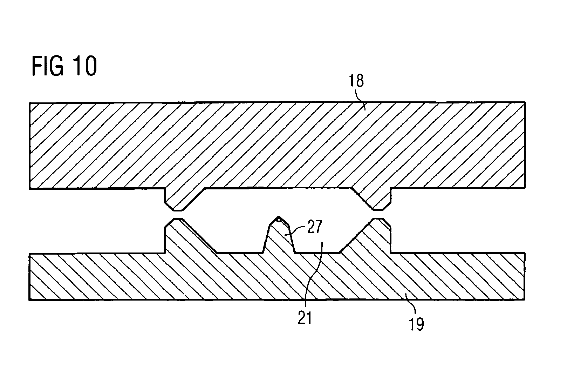

Figur 10 zeigt im Querschnitt ein weiteres Prägewerkzeug, wobei sich dieses von dem in Figur 8A dargestellten Prägewerkzeug dadurch unterscheidet, dass auf dem Unterteil ein weiterer Vorsprung 27 zur Ausbildung einer Aussparung 13 an der Unterseite einer Kufe 9 vorgesehen ist.

Die Herstellung der Dichtung ist extrem einfach und daher kostengünstig. Eine Blechlage mit konstanter Materialdicke wird in das Prägewerkzeug eingelegt und in einem Prägeschritt wird die Dichtlage beziehungsweise Dichtung mit den gewünschten Kufen 9 und Geometrien erzeugt. Anschließend kann die Dichtung lediglich noch zusätzlich mit einer verschleißfesten Beschichtung versehen werden.

Sämtliche Geometrien der Dichtungskufen, auch wenn sie in den Figuren nicht dargestellt sind, wie zum Beispiel mit schräg eingeprägten Stufen oder nur einer Stufe an der Oberseite oder einer Stufe an der Unterseite oder mehreren Aussparungen, werden in einem Prägeschritt erzeugt. Jede Kufe wird durch Querprägen aufgedickt und aufgrund der Ausbildung des Oberteils und Unterteils des Prägewerkzeugs wird die gewünschte Geometrie der Kufe erzielt. Der Hohlraum, in welchem die Kufe 9 zwischen dem Oberteil und dem Unterteil des Prägewerkzeugs gebildet wird, wird komplett beim Prägevorgang ausgefüllt, wodurch gleichzeitig auch eine Kalibrierung entsteht und somit immer Kufen 9 mit der gewünschten Geometrie und Dicke erzielt werden. Eine zusätzliche Abstützung ist für die Herstellung der erfindungsgemäßen Dichtung beziehungsweise Dichtlage nicht notwendig und auch nicht gewünscht, weil durch eine zusätzliche Abstützung nur höhere Prägekräfte erforderlich wären und zusätzlicher Platz beansprucht würde.

Die Erfindung ist nicht auf die dargestellten Ausführungsbeispiele beschränkt, sondern es sind insbesondere auch Ausführungsformen ohne eingeprägte Stufen oder mit jeweils nur einer Stufe an der Oberseite und Unterseite möglich.

### Bezugszeichenliste

- 1: Brennraumöffnungen
- 2: Schraubenöffnungen
- 3: Öffnungen für Fluidleitungen
- 4: abdichtender Bereich
- 5: abstützender Bereich
- 6: Öffnung
- 7: unverformter Querschnitt des Dichtungsbleches
- 8: Verbindungssteg
- 9: Kufen
- 10: Stufe
- 11: Dichtkante
- 12: Schräge
- 13: Aussparungen
- 14: Motorblock
- 15: Bundbuchse
- 16: Buchsenbund
- 17: Zylinderkopf
- 18: Oberteil des Prägewerkzeugs
- 19: Unterteil des Prägewerkzeugs
- 20: Vorsprünge am Oberteil und Unterteil des Prägewerkzeuges, Krallen
- 21: Hohlraum
- 22: Schräge
- 23: horizontaler Abschnitt
- 24: Außenschräge
- 25: vertikaler Bereich
- 26: Stufe
- 27: Vorsprung für Aussparung

## Patentansprüche

1. Einlagige Dichtung oder Dichtlage einer mehrlagigen Dichtung aus Metall, die abstützende (5) und abdichtende Bereiche (4) aufweist,
**dadurch gekennzeichnet, dass**
zumindest ein abstützender (5) und abdichtender Bereich (4) durch eine geprägte Kufe (9) mit einer, gegenüber der ursprünglichen Blechdicke, erhöhten Dicke ausgeführt ist und hierzu an der Oberseite und/oder der Unterseite der wenigstens einen Kufe (9) eine Stufe (10) eingeprägt ist, durch welche sich die Kufe (9) im eingebauten Zustand elastisch biegt und der abdichtende Bereich (4) elastisch vorgespannt ist.

2. Einlagige Dichtung oder Dichtlage nach Anspruch 1,
**dadurch gekennzeichnet, dass**
die wenigstens eine Kufe (9) durch Querprägen eine größere Materialdicke als die ursprüngliche Blechdicke aufweist.

3. Einlagige Dichtung oder Dichtlage nach zumindest einem der vorhergehenden Ansprüche,
**dadurch gekennzeichnet, dass**
die wenigstens eine Kufe (9) durch einen einzigen Prägevorgang hergestellt ist.

4. Einlagige Dichtung oder Dichtlage nach zumindest einem der vorhergehenden Ansprüche,
**dadurch gekennzeichnet, dass**
durch die eingeprägte Stufe (10) eine Dichtkante (11) gebildet ist.

5. Einlagige Dichtung oder Dichtlage nach zumindest einem der vorhergehenden Ansprüche,
**dadurch gekennzeichnet, dass**
der Übergang zwischen der wenigstens einen Kufe (9) und der Ursprungsfläche der Dichtung durch zumindest eine relativ dünne Scharnierstelle beziehungsweise einen Verbindungssteg (8) gebildet ist.

6. Einlagige Dichtung oder Dichtlage nach zumindest einem der vorhergehenden Ansprüche,
**dadurch gekennzeichnet, dass**
die Stufen (10) planparallel oder schräg eingeprägt sind.

7. Einlagige Dichtung oder Dichtlage nach zumindest einem der vorhergehenden Ansprüche,
**dadurch gekennzeichnet, dass**
der abstützende Bereich (5) einer Kufe innen oder außen an der Kufe (9) angeordnet ist.

8. Einlagige Dichtung oder Dichtlage nach zumindest einem der vorhergehenden Ansprüche,
**dadurch gekennzeichnet, dass**
pro Kufe (9) beidseitig abstützende Bereiche (5) mit unterschiedlicher Materialdicke vorgesehen sind.

9. Einlagige Dichtung oder Dichtlage nach zumindest einem der vorhergehenden Ansprüche,
**dadurch gekennzeichnet, dass**
die nicht abstützenden Bereiche einer Kufe (9) ein- oder beidseitig Aussparungen (13) aufweisen.

10. Einlagige Dichtung oder Dichtlage nach zumindest einem der vorhergehenden Ansprüche,
**dadurch gekennzeichnet, dass**
die Dichtung eine zumindest einlagige Zylinderkopfdichtung oder Flanschdichtung ist.

11. Einlagige Dichtung oder Dichtlage nach zumindest einem der vorhergehenden Ansprüche,
**dadurch gekennzeichnet, dass**
die gesamte Dichtung beziehungsweise Dichtlage in einem Prägeschritt hergestellt ist.

12. Verfahren zum Herstellen einer Dichtung beziehungsweise Dichtlage nach einem der Ansprüche 1 bis 11,
**dadurch gekennzeichnet, dass**
eine Blechlage mit konstanter Materialdicke in einem Prägewerkzeug eingelegt wird und die Kufe (9) der Dichtung beziehungsweise Dichtlage durch Prägen erzielt wird, wobei das Prägewerkzeug ein Oberteil und ein Unterteil aufweist, und beim Prägevorgang im Bereich einer Kufe der Raum zwischen Oberteil und Unterteil bei maximaler Prägekraft vollkommen ausgefüllt ist.

13. Verfahren nach Anspruch 12,
**dadurch gekennzeichnet, dass**
die Herstellung der Kufe (9) in einem einzigen Prägevorgang erfolgt.

14. Verfahren nach Anspruch 12 oder 13,
**dadurch gekennzeichnet, dass**
die Herstellung der Kufen durch eine Kombination von Querprägen und senkrechten Verdrängungsprägen erfolgt.

15. Verfahren nach einem der Ansprüche 12 bis 14,
**dadurch gekennzeichnet, dass**
das Oberteil und das Unterteil des Prägewerkzeuges beidseitig einer zu bildenden Kufe Vorsprünge beziehungsweise Krallen (20) aufweist.

## Claims

1. Single-layer seal or a sealing layer of a multilayer seal made of metal, which has supporting regions (5) and sealing regions (4),
**characterized in that**
at least one supporting region (5) and one sealing region (4) are embodied by a stamped section (9) with a thickness which is increased compared to the original sheet-metal thickness, and for this purpose a step (10) is stamped onto the upper side and/or the underside of the at least one section (9), by means of which step (10) the section (9) bends elastically in the installed state, and the sealing region (4) is prestressed elastically.

2. Single-layer seal or sealing layer according to Claim 1,
**characterized in that**
the at least one section (9) has, through transverse stamping, a greater material thickness than the original sheet-metal thickness.

3. Single-layer seal or sealing layer according to at least one of the preceding claims,
**characterized in that**
the at least one section (9) is produced by a single stamping process.

4. Single-layer seal or sealing layer according to at least one of the preceding claims,
**characterized in that**
a sealing edge (11) is formed by the stamped-in step (10).

5. Single-layer seal or sealing layer according to at least one of the preceding claims,
**characterized in that**
the junction between the at least one section (9) and the original surface of the seal is formed by at least one relatively thin hinge point or a connecting bridge (8).

6. Single-layer seal or sealing layer according to at least one of the preceding claims,
**characterized in that**
the steps (10) are stamped in in a plane-parallel or oblique fashion.

7. Single-layer seal or sealing layer according to at least one of the preceding claims,
**characterized in that**
the supporting region (5) of a section is arranged on the inside or the outside of the section (9).

8. Single-layer seal or sealing layer according to at least one of the preceding claims,
**characterized in that**
supporting regions (5) with different material thicknesses are provided on both sides of each section (9).

9. Single-layer seal or sealing layer according to at least one of the preceding claims,
**characterized in that**
the non-supporting regions of a section (9) have recesses (13) on one side or on both sides.

10. Single-layer seal or sealing layer according to at least one of the preceding claims,
**characterized in that**
the seal is an at least single-layer cylinder head gasket or flange seal.

11. Single-layer seal or sealing layer according to at least one of the preceding claims,
**characterized in that**
the entire seal or sealing layer is produced in a stamping step.

12. Method for producing a seal or sealing layer according to one of Claims 1 to 11,
**characterized in that**
a sheet-metal layer with a constant material thickness is inserted into a stamping tool, and the section (9) of the seal or the sealing layer is produced by stamping, wherein the stamping tool has an upper part and a lower part, and during the stamping process the space between the upper part and the lower part in the region of a section is filled in completely when there is a maximum stamping force.

13. Method according to Claim 12,
**characterized in that**
the section (9) is produced in a single stamping process.

14. Method according to Claim 12 or 13,
**characterized in that**
the sections are produced by a combination of transverse stamping and perpendicular expulsion stamping.

15. Method according to one of Claims 12 to 14,
**characterized in that**
the upper part and the lower part of the stamping tool have projections or claw fasteners (20) on both sides of a section which is to be formed.

## Revendications

1. Garniture monocouche ou couche d'étanchéité d'une garniture multicouche en métal, qui présente des zones de support (5) et d'étanchéité (4), **caractérisée en ce qu'**au moins une zone de support (5) et d'étanchéité (4) est réalisée par une section estampée (9) avec une épaisseur accrue par rapport à l'épaisseur initiale de la tôle et un gradin (10) est en plus estampé dans la face supérieure et/ou la face inférieure de ladite au moins une section (9), par lequel la section (9) se courbe élastiquement à l'état monté et la zone d'étanchéité (4) est précontrainte élastiquement.

2. Garniture monocouche ou couche d'étanchéité selon la revendication 1, **caractérisée en ce que** ladite au moins une section (9) présente par estampage transversal une épaisseur de matière plus grande que l'épaisseur initiale de la tôle.

3. Garniture monocouche ou couche d'étanchéité selon au moins une des revendications précédentes, **caractérisée en ce que** ladite au moins une section (9) est produite par une seule opération d'estampage.

4. Garniture monocouche ou couche d'étanchéité selon au moins une des revendications précédentes, **caractérisée en ce qu'**une arête d'étanchéité (11) est formée par le gradin estampé (10).

5. Garniture monocouche ou couche d'étanchéité selon au moins une des revendications précédentes, **caractérisée en ce que** la transition entre ladite au moins une section (9) et la surface initiale de la garniture est formée par au moins un endroit charnière relativement mince ou une nervure de liaison (8).

6. Garniture monocouche ou couche d'étanchéité selon au moins une des revendications précédentes, **caractérisée en ce que** les gradins (10) sont estampés parallèlement au plan ou en oblique.

7. Garniture monocouche ou couche d'étanchéité selon au moins une des revendications précédentes, **caractérisée en ce que** la zone de support (5) d'une section est disposée intérieurement ou extérieurement sur la section (9).

8. Garniture monocouche ou couche d'étanchéité selon au moins une des revendications précédentes, **caractérisée en ce qu'**il est prévu par section (9) des zones de support (5) sur les deux côtés avec une épaisseur de matière différente.

9. Garniture monocouche ou couche d'étanchéité selon au moins une des revendications précédentes, **caractérisée en ce que** les zones non portantes d'une section (9) présentent des découpes (13) sur un côté ou les deux côtés.

10. Garniture monocouche ou couche d'étanchéité selon au moins une des revendications précédentes, **caractérisée en ce que** la garniture est un joint de culasse ou un joint de bride d'au moins une couche.

11. Garniture monocouche ou couche d'étanchéité selon au moins une des revendications précédentes, **caractérisée en ce que** la garniture ou la couche d'étanchéité entière est produite en une seule opération d'estampage.

12. Procédé pour fabriquer une garniture monocouche ou une couche d'étanchéité selon au moins une des revendications 1 à 11, **caractérisé en ce que** l'on dépose une couche de tôle d'épaisseur de matière constante dans un outil d'estampage et on produit la section (9) de la garniture ou de la couche d'étanchéité par estampage, dans lequel l'outil d'estampage présente une partie supérieure et une partie inférieure et, lors de l'opération d'estampage, l'espace entre la partie supérieure et la partie inférieure est entièrement rempli dans la région d'une section sous la force d'estampage maximale.

13. Procédé selon la revendication 12, **caractérisé en ce que** la production de la section (9) est réalisée en une seule opération d'estampage.

14. Procédé selon la revendication 12 ou 13, **caractérisé en ce que** la production des sections est réalisée par une combinaison d'estampage transversal et d'estampage de refoulement vertical.

15. Procédé selon l'une quelconque des revendications 12 à 14, **caractérisé en ce que** la partie supérieure et la partie inférieure de l'outil d'estampage présentent de part et d'autre d'une section à former des saillies ou des griffes (20).
